**Europäisches Patentamt**

**European Patent Office**

**Office européen des brevets**

(19)

(11) **EP 1 382 569 A1**

(12) **EUROPÄISCHE PATENTANMELDUNG**

(43) Veröffentlichungstag:
**21.01.2004 Patentblatt 2004/04**

(21) Anmeldenummer: **03012477.0**

(22) Anmeldetag: **31.05.2003**

(51) Int Cl.⁷: **C01B 11/18**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **05.06.2002 DE 10224859**

(71) Anmelder: **Fraunhofer-Gesellschaft zur Förderung der angewandten Forschung e.V. 80686 München (DE)**

(72) Erfinder:
• **Teipel, Ulrich, Dr.Ing.**
  **76327 Pfinztal (DE)**
• **Reinhard, Werner**
  **76149 Karlsruhe (DE)**

• **Elsner, Peter, Dr.**
  **76327 Pfinztal (DE)**
• **Heintz, Thomas, Dipl.-Ing.**
  **76327 Pfinztal (DE)**
• **Krause, Horst, Dr.**
  **76327 Pfinztal (DE)**

(74) Vertreter:
**Lempert, Jost, Dipl.-Phys. Dr. rer.nat. et al Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(54) **Verfahren zur Herstellung von rieselfähigem Perchlorat und Zusammensetzung mit solchem Perchlorat**

(57) Es wird ein Verfahren zur Herstellung von rieselfähigem Perchlorat vorgeschlagen, indem partikelförmiges Perchlorat mit wenigstens einem partikelförmigen, oberflächenaktiven Antibackmittel gemischt, die Mischung in einen inerten Trägergasstrom eingebracht und in dem Trägergasstrom prallzerkleinert wird, was insbesondere mittels Strahlmühlen geschehen kann. Als Antibackmittel kommen vorzugsweise Alkylarylsulfonate, Siliciumoxide oder Phosphate zum Einsatz. Das Verfahren ermöglicht die Herstellung eines feinpartikulären Produktes mit einer Partikelgröße im unteren µm-Bereich, welches über einen verhältnismäßig langen Zeitraum riesel- und lagerfähig bleibt und insbesondere nicht zum Zusammenbacken bzw. Verklumpen neigt. Die Erfindung betrifft ferner eine Zusammensetzung aus derart hergestelltem rieselfähigem Perchlorat, insbesondere Kalium- oder Ammoniumperchlorat, welches mit einem feinpartikulären, oberflächenaktiven Antibackmittel versetzt ist, und einen Festtreibstoff, der eine solche Zusammensetzung enthält.

**EP 1 382 569 A1**

**Beschreibung**

Die Erfindung betrifft ein Verfahren zur Herstellung von rieselfähigem Perchlorat, eine Zusammensetzung mit solchem Perchlorat sowie einen Festtreibstoff, der eine solche Zusammensetzung enthält.

Perchlorate finden insbesondere als Treib- und Explosivstoffe bzw. als Oxidatoren für solche Stoffe vielfältige Verwendung. Sie zerfallen durch Erwärmung unter Abspaltung von Sauerstoff in die entsprechenden Chloride, wobei die frei werdende Reaktionsenthalpie insbesondere in Festtreibstoffen und Pyrotechnika genutzt wird. So wird beispielsweise Ammoniumperchlorat ($NH_4ClO_4$) in Festtreibstoffen für Rückstoßflugkörper, wie Weltraumflugkörper (Raketen), strategische Waffen etc., eingesetzt, während z.B. Kaliumperchlorat ($KClO_4$) verbreitet in Sprengstoffen und Pyrotechnika zum Einsatz kommt.

In der Anwendung sind sowohl für die Herstellung von Treib- und Sprengsätzen als auch die Verarbeitung feine, fließ- bzw. rieselfähige Partikel mit guter Kompaktier- und Lagerfähigkeit erwünscht. Die Herstellung von Perchloraten geschieht in der Regel durch Umsetzung von Metalloxiden, - hydroxiden oder -carbonaten mit wäßriger Perchlorsäure oder gemäß nachfolgender Reaktionsgleichung aus den entsprechenden Chloraten durch Erhitzen derselben oder Elektrolyse einer wäßrigen Chloratlösung:

$$4\ ClO_3^- \rightarrow 3\ ClO_4^- + Cl^-$$

Hierbei entstehen in der Regel unregelmäßige Partikel mit einer Partikelgröße größer 100 µm. Die Zerkleinerung solcher Partikel ist problematisch, da Perchlorate mit abnehmender Partikelgröße verstärkt zum Zusammenbacken neigen. So wurde festgestellt, daß sich Perchlorate durch herkömmliche mechanische Zerkleinerung zwar auf eine Partikelgröße im Bereich von 10 µm zerkleinern lassen, das erhaltene Produkt jedoch innerhalb weniger Stunden agglomeriert und vollständig zusammenbackt.

Der Erfindung liegt die Aufgabe zugrunde, ein einfaches und kostengünstiges Verfahren zur Herstellung von rieselfähigem Perchlorat vorzuschlagen, welches den Erhalt eines feinpartikulären Produktes mit guter Lagerfähigkeit ermöglicht, sowie eine Zusammensetzung aus solchen Partikeln vorzuschlagen.

In verfahrenstechnischer Hinsicht wird diese Aufgabe erfindungsgemäß durch folgende Verfahrensschritte gelöst:

(a) Mischen wenigstens eines Perchlorates mit wenigstens einem partikelförmigen, oberflächenaktiven Antibackmittel;
(b) Einbringen der Mischung in einen inerten Trägergasstrom;
(c) Prallzerkleinern der Mischung in dem Trägergasstrom.

Es wurde gefunden, daß durch Vormischen des rohen Perchlorates, welches z.B. in grobpartikulärer Form vorliegen und gegebenenfalls auf herkömmliche Weise vorzerkleinert werden kann, mit einem geeigneten Antibackmittel und anschließendes Prallzerkleinern der Mischung in einem inerten Trägergasstrom ein feinpartikuläres, rieselfähiges Produkt erhalten werden kann, welches auch über einen langen Zeitraum lagerfähig bleibt und insbesondere nicht zusammenbackt. Dies überrascht insofern, als ein nachträgliches Mischen von durch Prallzerkleinerung oder auf beliebige andere Weise erhaltenen feinen Perchloratpartikeln mit feinpartikulären Antibackmitteln zum Agglomerieren des Perchlorats führt. Eine Weiterverarbeitung des Perchlorates ist auf diese Weise praktisch nicht möglich.

Demgegenüber ermöglicht das erfindungsgemäße Verfahren erstmals die Herstellung von Feinpartikeln aus Perchloraten mit einer Partikelgröße bis in den Submikronbereich (kleiner 1 µm), welche aufgrund der homogenen Verteilung eines feinpartikulären Antibackmittels nicht zum Zusammenbacken neigen, über einen langen Zeitraum gut rieselfähig bleiben und ferner eine hohe Kompaktierfähigkeit und Schüttdichte aufweisen. Überdies erfordert das erfindungsgemäße Verfahren nur einen sehr geringen Zusatz an Antibackmittel, so daß der Eintrag von Fremdstoffen, insbesondere Inertstoffen, in das Perchlorat sehr gering gehalten werden kann, was beim Einsatz der Perchloratpartikel in Festtreibstoffen, z.B. für Raketen, von Bedeutung ist. Das Vormischen des partikelförmigen Einsatzgutes kann auf beliebige bekannte Weise erfolgen, wobei zweckmäßig einer möglichst homogenen Mischung Sorge zu tragen ist.

In bevorzugter Ausführung ist vorgesehen, daß Antibackmittel aus der Gruppe der Alkylarylsulfonate (Alkylarensulfonate) eingesetzt werden, wobei vorzugsweise Antibackmittel aus der Gruppe der Alkylnaphthalinsulfonate eingesetzt werden. Als besonders vorteilhaft haben sich dabei Antibackmittel aus der Gruppe der Alkylnaphthalinalkalisulfonate, d.h. der Alkalisalze der Alkylnaphthalinsulfonsäuren, insbesondere Alkylnaphthalinnatriumsulfonat, erwiesen.

Eine andere bevorzugte Ausführung sieht vor, daß Antibackmittel aus der Gruppe der Siliciumoxide, insbesondere Siliciumdioxid ($SiO_2$), eingesetzt werden.

Gemäß einer weiteren bevorzugten Ausführung ist vorgesehen, daß Antibackmittel aus der Gruppe der Phosphate eingesetzt werden, wobei vorzugsweise Antibackmittel aus der Gruppe der Alkali- und/oder Erdalkaliphosphate, insbesondere Tricalciumphosphat ($Ca_3(PO_4)_2$), eingesetzt werden. Die genannten Antibackmittel können selbstverständlich separat oder auch in Kombination eingesetzt werden.

Wie bereits erwähnt, ermöglicht das erfindungsgemäße Verfahren einen nur sehr geringen Zusatz an Antibackmittel, um für eine einwandfreie Lagerfähigkeit der zerkleinerten Perchloratpartikel unter Vermeidung eines Zusammenbackens bzw. Verklumpens derselben zu sorgen. Je nach Art des Antibackmittels wird dieses vorzugsweise mit einem Anteil zwischen 0,5 und 3 Mass.-%, insbesondere zwischen 0,5 und 1,5 Mass.-%, bezogen auf das Perchlorat eingesetzt. Sofern eine möglichst hohe Reinheit des Perchlorates nicht als notwendig erachtet wird, können dem Perchlorat selbstverständlich auch höhere Dosen des Antibackmittels beigemischt werden.

Als Trägergas, in welches die Mischung aus Perchlorat und Antibackmittel anläßlich der Prallzerkleinerung eingebracht wird, kommen prinzipiell beliebige Gase in Betracht, die bei den jeweils eingestellten Druck- und Temperaturbedingungen inert sind und weder mit dem Perchlorat noch mit dem Antibackmittel in Reaktion treten. Grundsätzlich sollten trockene Gase verwendet werden, um einen Eintrag von Feuchtigkeit in das Perchlorat zu vermeiden. So kann beispielsweise ein Trägergas aus der Gruppe Stickstoff, Kohlendioxid, Edelgase, insbesondere Helium, Neon oder Argon, trockene Luft oder Mischungen hiervon eingesetzt werden.

Zur Prallzerkleinerung der Mischung werden zweckmäßig Strahlmühlen, insbesondere Spiralstrahlmühlen und/oder Fließbettstrahlmühlen, eingesetzt. Solche Strahlmühlen, deren Zerkleinerungswirkung auf dem Aufprall des in dem unter Druck gesetzten Trägergasstrom befindlichen Einsatzgutes auf eine Prallfläche beruht, sind bekannt. Während die Prallfläche im einfachsten Fall von einer Platte gebildet sein kann, auf welche das Einsatzgut auftrifft, kann die Prallfläche z.B. auch von mehreren, unter Bildung eines Spaltes angeordneten Platten oder von einer einen Ringspalt freilassenden Ringblende (Spiralstrahlmühle) gebildet sein, so daß das Einsatzgut nach Auftreffen auf die eine, den Spalt an der einen Seite begrenzende Fläche auf die andere, den Spalt an der anderen Seite begrenzenden Fläche reflektiert und auf diese Weise eine besonders effektive Zerkleinerung des Einsatzgutes erreicht wird.

Das Perchlorat wird vorzugsweise mit einer Partikelgröße zwischen etwa 100 µm und 1000 µm, insbesondere zwischen etwa 200 µm und 500 µm, eingesetzt, wobei selbstverständlich auch ein demgegenüber grobpartikuläreres Einsatzgut auf herkömmliche Weise mechanisch auf die genannte Partikelgröße vorzerkleinert werden kann. Das Antibackmittel wird bevorzugt mit einer Partikelgröße zwischen etwa 10 µm und etwa 100 µm eingesetzt.

Die Größe der erhaltenen rieselfähigen Perchloratpartikel richtet sich insbesondere nach der Anwendung derselben, z.B. in Pyrotechnika, Festtreibstoffen oder dergleichen, wobei sich durch das erfindungsgemäße Verfahren sehr kleine Partikel mit einer Partikelgröße im Bereich von 1 µm problemlos herstellen lassen. So kann das Perchlorat beispielsweise auf eine Partikelgröße zwischen etwa 0,1 µm und 10 µm, insbesondere zwischen etwa 0,5 µm und 5 µm, zerkleinert werden. Die Einstellung der Partikelgröße des erhaltenen Produktes geschieht insbesondere durch den Druck des Trägergases bzw. die Aufprallgeschwindigkeit des Einsatzgutes auf die Prallfläche.

Das erfindungsgemäße Verfahren ist insbesondere zur Herstellung von feinen, rieselfähigen Partikeln aus Kalium-($KClO_4$) und/oder Ammoniumperchlorat ($NH_4ClO_4$) zum Einsatz in Festtreibstoffen, Sprengstoffen, Pyrotechnika etc. geeignet, wobei das Kalium- und/oder Ammoniumperchlorat unmittelbar eingesetzt, mit einem Antibackmittel gemischt und die in einen inerten Trägergasstrom eingebrachte Mischung durch Prallzerkleinerung zerkleinert wird.

Die Erfindung betrifft auch eine insbesondere nach dem vorgenannten Verfahren hergestellte Zusammensetzung aus rieselfähigem Perchlorat mit einer Partikelgröße kleiner 10 µm und wenigstens einem im wesentlichen homogen verteilten, feinpartikulären, oberflächenaktiven Antibackmittel, welches ein Zusammenbacken bzw. Verklumpen der Perchloratpartikel zuverlässig verhindern und diesen folglich eine einwandfreie Lagerfähigkeit verleiht.

Das Antibackmittel ist in bevorzugter Ausführung aus der Gruppe der Alkylarylsulfonate (Alkylarensulfonate), vorzugsweise aus der Gruppe der Alkylnaphthalinsulfonate, insbesondere aus der Gruppe der Alkylnaphthalinalkalisulfonate, z.B. Alkylnaphthalinnatriumsulfonat, gewählt. Alternativ oder zusätzlich kann das Antibackmittel aus der Gruppe der Siliciumoxide, insbesondere Siliciumdioxid, und/oder aus der Gruppe der Phosphate, vorzugsweise aus der Gruppe der Alkali und/oder Erdalkaliphosphate, z.B. Tricalciumphosphat, gewählt sein.

Aus Gründen einer möglichst hohen Reinheit des Perchlorates sollte der Anteil des Antibackmittels so gering wie möglich gehalten sein, wobei die Zusammensetzung in vorteilhafter Ausgestaltung 0,5 bis 3 Mass.-%, insbesondere 0,5 bis 1,5 Mass.-%, Antibackmittel bezogen auf das Perchlorat enthält. Die Perchloratpartikel können insbesondere aus der Gruppe Kaliumperchlorat und/oder Ammoniumperchlorat gewählt sein.

Nachstehend ist das erfindungsgemäße Verfahren anhand von Ausführungsbeispielen näher erläutert.

**Beispiel 1:**

Zur Herstellung von feinen, rieselfähigen Partikeln aus Ammoniumperchlorat ($NH_4ClO_4$) wird handelsübliches Ammoniumperchlorat mit einer mittleren Partikelgröße von etwa 400 µm in einem Doppelkonusmischer mit 1 Mass.-% (bezogen auf das $NH_4ClO_4$) Alkylnaphthalinnatriumsulfonat (Petro ®) mit der allgemeinen chemischen Formel R-$C_{10}H_6$-$SO_3$Na (R = A1kylgruppe) und einer mittleren Partikelgröße von etwa 50 µm bei 20°C über 20 Minuten homogen gemischt. Die Mischung wird in einen inerten Trägergasstrom (trockene Luft) mit einem Druck von etwa 10 bar (= $10^6$ Pa) eingebracht und in einer Spiralstrahlmühle bei einem Durchsatz von 8 kg Mahlgut pro Stunde auf eine mittlere Partikelgröße des Perchlorates von etwa 2 μm zerkleinert. Das erhaltene Produkt weist eine hervorragende Lagerfähigkeit unter zuverlässiger Vermeidung eines Zusammenbackens bzw. Verklumpens der Ammoniumperchloratpartikel auf.

Die derart hergestellte Zusammensetzung aus rieselfähigen Ammoniumperchloratpartikeln ist beispielsweise für die Verwendung in Festtreibstoffen geeignet, wobei die homogene Verteilung des feinpartikulären Antibackmittels (Alkylnaphthalinnatriumsulfonat) über einen langen Zeitraum eine gute Dosierbarkeit des Treibstoffes sowie einen kontrollierten Abbrand desselben gewährleistet. Ein typischer Festtreibstoff enthält ca. 70% Mass.-% Ammoniumperchlorat mit unterschiedlicher Partikelgröße mit einem überwiegenden Anteil kleiner 10 μm gemäß der Erfindung, 15% Mass.-% Polymerbinder, wie Hydroxy-terminiertes Polybutadion (HTPB) oder .Glycidyl-azidpolymer (GAP) und 15% Mass.-% Aluminium mit einer Partikelgröße im Bereich von 30 μm.

**Beispiel 2:**

Zur Herstellung von feinen, rieselfähigen Partikeln aus Kaliumperchlorat ($KClO_4$) wird handelsübliches Kaliumperchlorat mit einer mittleren Partikelgröße von etwa 200 μm in einem Doppelkonusmischer mit 0,8 Mass.-% (bezogen auf das $KClO_4$) handelsüblichem Tricalciumphosphat ($Ca_3(PO_4)_2$) mit einer mittleren Partikelgröße von etwa 80 μm bei 20°C über 30 Minuten homogen gemischt. Die Mischung wird in einen inerten Trägergasstrom (trockene Luft) mit einem Druck von etwa 7 bar (= $7 \cdot 10^5$ Pa) eingebracht und in einer Strahlmühle bei einem Durchsatz von 7,5 kg Mahlgut pro Stunde auf eine mittlere Partikelgröße des Perchlorates von etwa 1,6 μm zerkleinert. Das erhaltene Produkt weist eine hervorragende Lagerfähigkeit unter zuverlässiger Vermeidung eines Zusammenbackens bzw. Verklumpens der Kaliumperchloratpartikel auf.

**Patentansprüche**

1. Verfahren zur Herstellung von rieselfähigem Perchlorat, **gekennzeichnet durch** folgende Schritte:

   (a) Mischen von partikelförmigem Perchlorat mit wenigstens einem partikelförmigen, oberflächenaktiven Antibackmittel;

   (b) Einbringen der Mischung in einen inerten Trägergasstrom;

   (c) Prallzerkleinern der Mischung in dem Trägergasstrom.

2. Verfahren nach Anspruch 1, **dadurch gekennzeichnet, daß** Antibackmittel aus der Gruppe der Alkylarylsulfonate (Alkylarensulfonate) eingesetzt werden.

3. Verfahren nach Anspruch 2, **dadurch gekennzeichnet, daß** Antibackmittel aus der Gruppe der Alkylnaphthalinsulfonate eingesetzt werden.

4. Verfahren nach Anspruch 2 oder 3, **dadurch gekennzeichnet, daß** Antibackmittel aus der Gruppe der Alkylnaphthalinalkalisulfonate, insbesondere Alkylnaphthalinnatriumsulfonat, eingesetzt werden.

5. Verfahren nach Anspruch 1, **dadurch gekennzeichnet, daß** Antibackmittel aus der Gruppe der Siliciumoxide, insbesondere Siliciumdioxid, eingesetzt werden.

6. Verfahren nach Anspruch 1, **dadurch gekennzeichnet, daß** Antibackmittel aus der Gruppe der Phosphate eingesetzt werden.

7. Verfahren nach Anspruch 6, **dadurch gekennzeichnet, daß** Antibackmittel aus der Gruppe der Alkali- und/oder Erdalkaliphosphate, insbesondere Tricalciumphosphat, eingesetzt werden.

8. Verfahren nach einem der Ansprüche 1 bis 7, **dadurch gekennzeichnet, daß** das Antibackmittel mit einem Anteil zwischen 0,5 und 3 Mass.-%, insbesondere zwischen 0,5 und 1,5 Mass.-%, bezogen auf das Perchlorat eingesetzt wird.

9. Verfahren nach einem der Ansprüche 1 bis 8, **dadurch gekennzeichnet, daß** ein Trägergas aus der Gruppe Stickstoff, Kohlendioxid, Edelgase, trockene Luft oder Mischungen hiervon eingesetzt wird.

10. Verfahren nach einem der Ansprüche 1 bis 9, **dadurch gekennzeichnet, daß** zur Prallzerkleinerung der Mischung Strahlmühlen, insbesondere Spiralstrahlmühlen und/oder Fließbettstrahlmühlen, eingesetzt werden.

11. Verfahren nach einem der Ansprüche 1 bis 10, **dadurch gekennzeichnet, daß** das Perchlorat mit einer Partikelgröße zwischen 100 μm und 1000 μm, insbesondere zwischen 200 μm und 500 μm, eingesetzt wird.

12. Verfahren nach einem der Ansprüche 1 bis 11, **dadurch gekennzeichnet, daß** das Antibackmittel mit einer Partikelgröße zwischen 10 μm und 100 μm eingesetzt wird.

13. Verfahren nach einem der Ansprüche 1 bis 12, **da-**

**durch gekennzeichnet, daß** das Perchlorat auf eine Partikelgröße zwischen 0,1 µm und 10 µm, insbesondere zwischen 0,5 µm und 5 µm, zerkleinert wird.

14. Verfahren nach einem der Ansprüche 1 bis 13, **dadurch gekennzeichnet, daß** Kalium- ($KClO_4$) und/ oder Ammoniumperchlorat ($NH_4ClO_4$) eingesetzt wird.

15. Zusammensetzung aus rieselfähigem Perchlorat mit einer Partikelgröße kleiner 10 µm und wenigstens einem im wesentlichen homogen verteilten, feinpartikulären, oberflächenaktiven Antibackmittel.

16. Zusammensetzung nach Anspruch 15 mit wenigstens einem Antibackmittel nach einem der Ansprüche 2 bis 7.

17. Zusammensetzung nach Anspruch 15 oder 16, enthaltend 0,5 bis 3 Mass.-%, insbesondere 0,5 bis 1,5 Mass.-%, Antibackmittel bezogen auf das Perchlorat.

18. Zusammensetzung nach einem der Ansprüche 15 bis 17 mit Perchloratpartikeln aus der Gruppe Kaliumperchlorat ($KClO_4$) und/oder Ammoniumperchlorat ($NH_4ClO_4$).

19. Festtreibstoff, enthaltend Ammoniumperchlorat unterschiedlicher Partikelgröße von kleiner 50 µm mit einem überwiegenden Anteil der Zusammensetzung nach einem der Ansprüche 15 bis 17, einem Polymerbinder und Aluminium.

20. Festtreibstoff nach Anspruch 19 mit ca. 70% Mass.-% Ammoniumperchlorat, ca. 15% Mass.-% Polymerbinder und ca. 15% Aluminium.

EP 1 382 569 A1

| | **Europäisches** **EUROPÄISCHER RECHERCHENBERICHT** | **Nummer der Anmeldung** |
| | **Patentamt** | EP 03 01 2477 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 3 685 163 A (OLT ROBERT L) 22. August 1972 (1972-08-22) * Zusammenfassung; Beispiele 1-5 * --- | 1-20 | C01B11/18 |
| A | US 2 739 873 A (SCHUMACHER JOSEPH C) 27. März 1956 (1956-03-27) * Spalte 1, Zeile 1-27,54-62 * --- | 1-20 | |
| A | GB 1 605 182 A (SECR DEFENCE) 23. Februar 1983 (1983-02-23) * Ansprüche 1-18 * --- | 1-20 | |
| A | US 2 858 188 A (HALLER JOHN F) 28. Oktober 1958 (1958-10-28) * Anspruch 1 * --- | 1-20 | |
| A | US 3 436 172 A (FEIN MARVIN M ET AL) 1. April 1969 (1969-04-01) * Anspruch 1 * --- | 1-20 | |
| A | US 3 883 641 A (CONRAD RAYMOND) 13. Mai 1975 (1975-05-13) * Anspruch 1 * ----- | 1-20 | **RECHERCHIERTE SACHGEBIETE (Int.Cl.7)** C01B |

Der vorliegende Recherchenbericht wurde für alle Patentansprüche erstellt

| Recherchenort | Abschlußdatum der Recherche | Prüfer |
|---|---|---|
| MÜNCHEN | 26. November 2003 | Arnotte, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

6

**ANHANG ZUM EUROPÄISCHEN RECHERCHENBERICHT
ÜBER DIE EUROPÄISCHE PATENTANMELDUNG NR.**

EP 03 01 2477

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2003

| Im Recherchenbericht angeführtes Patentdokument | Datum der Veröffentlichung | Mitglied(er) der Patentfamilie | Datum der Veröffentlichung |
|---|---|---|---|
| US 3685163 A | 22-08-1972 | CA 972533 A1<br>GB 1371704 A | 12-08-1975<br>23-10-1974 |
| US 2739873 A | 27-03-1956 | KEINE | |
| GB 1605182 A | 23-02-1983 | KEINE | |
| US 2858188 A | 28-10-1958 | KEINE | |
| US 3436172 A | 01-04-1969 | KEINE | |
| US 3883641 A | 13-05-1975 | KEINE | |

EPO FORM P0461

Für nähere Einzelheiten zu diesem Anhang : siehe Amtsblatt des Europäischen Patentamts, Nr.12/82